# EUROPÄISCHE PATENTSCHRIFT

(11) **EP 3 054 276 B1**
(45) Veröffentlichungstag und Bekanntmachung des Hinweises auf die Patenterteilung: **27.12.2017**
(21) Anmeldenummer: 14182355.9
(22) Anmeldetag: 26.08.2014
(51) Int. Cl.: G03B 37/00, G01M 3/00, G01M 11/08, E03F 7/12

(54) **Drehmodul für ein Inspektionssystem**
Rotary module for an inspection system
Module rotatif pour un système d'inspection

(30) Priorität: 13.09.2013 DE 202013104188 U
(43) Veröffentlichungstag der Anmeldung: 10.08.2016
(73) Patentinhaber: iPEK International GmbH, 87477 Sulzberg (DE)
(72) Erfinder: Henn, Peter, 87542 Krugzell (DE); Zahnd, Fabian, 87437 Kempten (DE)
(74) Vertreter: 2s-ip Schramm Schneider Bertagnoll Patent- und Rechtsanwälte Part mbB

(56) Entgegenhaltungen:
- DE-A1- 19 549 473
- DE-U1- 20 318 292

## Beschreibung

### Gebiet der Erfindung

Die Erfindung betrifft eine Vorrichtung für ein Inspektionssystem, insbesondere Kanal- bzw. Rohrinspektionssystem mit einem Drehmodul, sowie ein Inspektionssystem mit einer erfindungsgemäßen Vorrichtung.

### Hintergrund der Erfindung und Stand der Technik

Zur Durchführung von Rohr- bzw. Kanalinspektionen ist es bekannt, sogenannte Rohr- bzw. Kanalinspektionssysteme zu verwenden, die in das zu inspizierende Rohr bzw. Kanalrohr eingebracht werden können und im Kanalrohr bewegt, etwa verfahren werden können. Die Kanalinspektionssysteme können eine Bildaufhahmeeinrichtung, etwa eine Kamera bzw. Videokamera aufweisen, die beispielsweise an einem Fahrwagen des Kanalinspektionssystems angeordnet sein kann. Anstelle oder zusätzlich zur Kamera bzw. Videokamera können an dem Fahrwagen auch Werkzeuge, etwa eine Zange, ein Greifer, oder eine Fräseinrichtung angeordnet sein.

Die Kamera bzw. Videokamera sowie die Werkzeuge können drehbar um ihre Längsachse bzw. schwenkbar an dem Fahrwagen des Kanalinspektionssystems angeordnet sein. Bei der Aufzeichnung von Bildern bzw. Videobildern mit der Kamera bzw. Videokamera ist es wünschenswert, wenn das aufgenommene Bild bzw. die aufgenommenen Videobilder unabhängig von dem Drehwinkel der Kamera bzw. die aufgenommenen Videobilder unabhängig von dem Drehwinkel der Videokamera lagerichtig wiedergegeben werden. Im Stand der Technik ist es vorgesehen, die verdreht aufgenommenen Bilder, die in digitaler Form vorliegen können, zu drehen, in dem beispielsweise die Bilddaten transformiert werden, um so ein lagerichtiges Bild zu erhalten. Dies hat allerdings den Nachteil, dass bei Verwendung eines rechtwinkligen Bildsensors nach der Drehung des Bildes nicht mehr die gesamte Bildinformation in dem gedrehten Bild enthalten ist. Ferner ist das Drehen von Bildern rechenintensiv, was insbesondere bei Videobildern nachteilig ist, wenn diese nahezu in Echtzeit gedreht werden müssen.

Sind Werkzeuge an dem Fahrwagen des Kanalinspektionssystems angeordnet, so ist es wünschenswert, wenn das Werkzeug unabhängig von der Aufnahmevorrichtung für das Werkzeug gedreht werden kann.

Aus der DE 203 18 292 U1 ist eine Rohrinspektionseinheit mit einem Lenkstab bekannt. Der Lenkstab ist an einem Dreh- und/oder Schwenkkopf angeordnet. Der Dreh- und/oder Schwenkkopf besteht aus einem kugelförmigen Drehmodul, das um eine Drehachse drehbar an einem gabelförmigen Schwenkgehäuse angeordnet ist, wobei die Drehachse quer zum Schwenkgehäuse verläuft. Das Schwenkgehäuse selbst ist im seine Längsachse drehbar.

Aus der DE 195 49 473 A1 ist Kamerasystem zur Untersuchung von Rohrleitungen bekannt. Das Kamerasystem weist ein Kameramodul auf, das um eine Längsachse drehbar in einem Gehäuse des Kamerasystems gelagert ist. Beim Drehen des Kamerasystems um seine Längsachse wird das Kameramodul um einen entsprechenden Winkel gedreht, sodass der Bildaufnehmer des Kameramoduls stets waagrecht ausgerichtet ist.

### Aufgabe der Erfindung

Aufgabe der vorliegenden Erfindung ist es daher, die aus dem Stand der Technik bekannten Nachteile zumindest teilweise zu vermeiden und Lösungen bereitzustellen, die es ermöglichen, aufgenommene Bilder immer lagerichtig wiederzugeben und Werkzeuge unabhängig von einer Werkzeugaufnahme drehen bzw. schwenken zu können.

### Erfindungsgemäße Lösung

Erfindungsgemäß wird diese Aufgabe mit einer Vorrichtung für ein Inspektionssystem nach Anspruch 1 gelöst. Vorteilhafte Weiterbildungen und Ausgestaltungen der Erfindung sind in den abhängigen Ansprüchen angegeben.

Bereitgestellt wird demnach eine Vorrichtung für ein Inspektionssystem, insbesondere Kanal- bzw. Rohrinspektionssystem, das ein Drehmodul umfasst, das mit einem Schwenkgehäuse gekoppelt ist, wobei das Schwenkgehäuse um seine Längsachse drehbar an dem Inspektionssystem angeordnet ist, wobei das Drehmodul um seine Längsachse relativ zum Schwenkgehäuse drehbar ist, wobei das Drehmodul einen Schleifring zur Signal- und Energieübertragung zwischen dem Drehmodul und dem Schwenkgehäuse umfasst und wobei die Vorrichtung ferner eine Schwenkgabel umfasst, an der das Drehmodul lösbar befestigt ist und mit der das Drehmodul mit dem Schwenkgehäuse gekoppelt ist, wobei die Schwenkgabel um eine Schwenkachse relativ zum Schwenkgehäuse schwenkbar ist.

Der Schleifring ermöglicht es, das Drehmodul in beide Richtungen um 360° und mehr zu drehen, unabhängig von einem Drehwinkel des Schwenkgehäuses. Durch Einstellen des Drehwinkels des Drehmoduls kann ein von einer am Drehmodul angeordneten Kamera aufgenommenes Bild bereits lagerichtig aufgenommen werden und muss nicht mehr nachbearbeitet werden, um ein lagerichtiges Bild zu erhalten. Ferner kann ein an dem Drehmodul angeordnetes Werkzeug unabhängig von der Drehachse des Schwenkgehäuses gedreht werden.

Mit der Schwenkgabel kann nicht nur der Drehwinkel des Drehmoduls eingestellt werden, sondern auch das Drehmodul um die Schwenkachse geschwenkt werden.

In einer Ausgestaltung der Erfindung ist an der Schwenkgabel eine erste Kontaktplatine und an dem Drehmodul eine zweite Kontaktplatine angeordnet, wobei die erste Kontaktplatine operativ mit der zweiten Kontaktplatine koppelbar ist, und wobei die zweite Kontaktplatine operativ mit dem Schleifring gekoppelt ist. Damit kann das Drehmodul besonders einfach von dem Schwenkgehäuse bzw. von der Schwenkgabel gelöst werden, so dass beispielsweise ein besonders einfacher und schneller Austausch eines Drehmoduls durch ein anderes Drehmodul ermöglicht wird.

In einer Ausgestaltung der Erfindung umfasst das Drehmodul ein Gehäuse und eine Drehachse, wobei das Gehäuse drehbar um die Drehachse auf der Drehachse gelagert ist, wobei in dem Gehäuse ein Drehgeber und ein Motor angeordnet sind, die jeweils fest mit dem Gehäuse verbunden sind, wobei der Drehgeber und der Motor mit der Drehachse gekoppelt sind, wobei der Motor vorgesehen ist das Gehäuse relativ zur Drehachse zu drehen und wobei der Drehgeber vorgesehen ist den Drehwinkel des Gehäuses relativ zur Drehachse aufzunehmen. Die gesamten Mittel, die für das Drehen des Drehmoduls notwendig sind, sind damit in dem Gehäuse des Drehmoduls untergebracht, so dass ein besonders einfaches Befestigen des Drehmoduls an der Schwenkgabel bzw. an dem Schwenkgehäuse ermöglicht wird.

In einer Ausgestaltung der Erfindung ist der Schleifring in der Drehachse angeordnet.

Vorzugsweise ist der Motor über eine Zahnradverbindung, vorzugsweise Zahnradverbindung mit Rutschkupplung mit der Drehachse gekoppelt.

In einer Ausgestaltung der Erfindung ist in dem Gehäuse eine Bildaufnahmeeinrichtung angeordnet. Die Bildaufnahmeeinrichtung kann eine digitale Bildaufnahmeeinrichtung, etwa einen CCD-Bildsensor mit dazugehöriger Elektronik und Objektiv umfassen. Die Bildaufnahmeeinrichtung ist ausgestaltet Einzelbilder oder Videobilder aufzunehmen.

In dem Gehäuse können ein, vorzugsweise zwei Leuchtmittel, vorzugsweise Leuchtdioden angeordnet sein. Die Leuchtdioden können vorgesehen sein, die Umgebung auszuleuchten oder beispielsweise Mess- bzw. Referenzpunkte auf ein zu vermessendes bzw. mit der Bildaufnahmeeinrichtung aufzunehmendes Objekt zu projizieren. Weil die Leuchtmittel in dem Gehäuse angeordnet sind und das Gehäuse immer lagerichtig gehalten werden kann, ist auch gewährleistet, dass auch die von den Leuchtmitteln erzeugten Punkte lagerichtig sind. Insbesondere wenn die von den Leuchtmitteln erzeugten Lichtpunkte auch in den von der Bildaufhahmeeinrichtung aufgenommenen Bildern abgebildet sind, ist gewährleistet, dass in den aufgenommenen Bildern auch die Lichtpunkte lagerichtig sind, was eine Auswertung der aufgenommenen Bilder erheblich vereinfacht.

In einer Ausgestaltung der Erfindung kann in dem Gehäuse oder an dem Gehäuse ein Werkzeug, insbesondere Greifer oder Fräsmittel, oder Sensoren angeordnet sein.

Vorteilhaft ist es, wenn das Gehäuse druck- und/oder wasserdicht ausgestaltet ist.

In einer vorteilhaften Ausgestaltung der Erfindung ist der Längsachse des Drehmoduls, der Längsachse des Schwenkgehäuses und/oder der Schwenkachse der Schwenkgabel jeweils ein Drehsensor bzw. Drehwinkelsensor zur Erfassung des jeweiligen Dreh- bzw. Schwenkwinkels zugeordnet. Damit ist es möglich, beispielsweise in Abhängigkeit des von der Längsachse des Schwenkgehäuses zugeordneten Drehsensors erfassten Drehwinkel den in dem Gehäuse angeordneten Motor zu steuern, um so die in dem Gehäuse angeordnete Bildaufnahmeeinrichtung unabhängig von dem Drehwinkel des Schwenkgehäuses lagerichtig zu halten.

In einer Ausgestaltung der Erfindung kann das Drehmodul eine elektronische Schaltung umfassen, die angepasst ist, den Motor in Abhängigkeit von dem Drehwinkel des Schwenkgehäuses zu steuern. In einer alternativen Ausgestaltung kann diese elektronische Schaltung auch außerhalb der Vorrichtung angeordnet sein, und über die Kontaktplatinen bzw. über den Schleifring mit dem Motor bzw. dem Drehgeber gekoppelt sein.

Bereitgestellt wird ferner auch ein Inspektionssystem, insbesondere Kanal- bzw. Rohrinspektionssystem, das eine erfindungsgemäße Vorrichtung aufweist.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1.: eine erfindungsgemäße Vorrichtung mit einem Drehmodul, das über eine Schwenkgabel mit dem Schwenkgehäuse gekoppelt ist, einmal in einer nicht gedrehten bzw. nicht verschwenkten Lage des Drehmoduls (Abb. (a)) und einmal bei gedrehter Lage des Schwenkgehäuses und verschwenkter Position der Schwenkgabel (Abb. (b));
- Fig. 2: eine erfindungsgemäße Vorrichtung in einer perspektivischen Ansicht, bei der das Drehmodul von der Schwenkgabel entkoppelt ist;
- Fig. 3: ein Drehmodul einer erfindungsgemäßen Vorrichtung, wobei an dem Drehmodul ein Werkzeug angeordnet ist; und
- Fig. 4.: eine Schnittansicht eines Drehmoduls einer erfindungsgemäßen Vorrichtung.

### Detaillierte Beschreibung der Erfindung

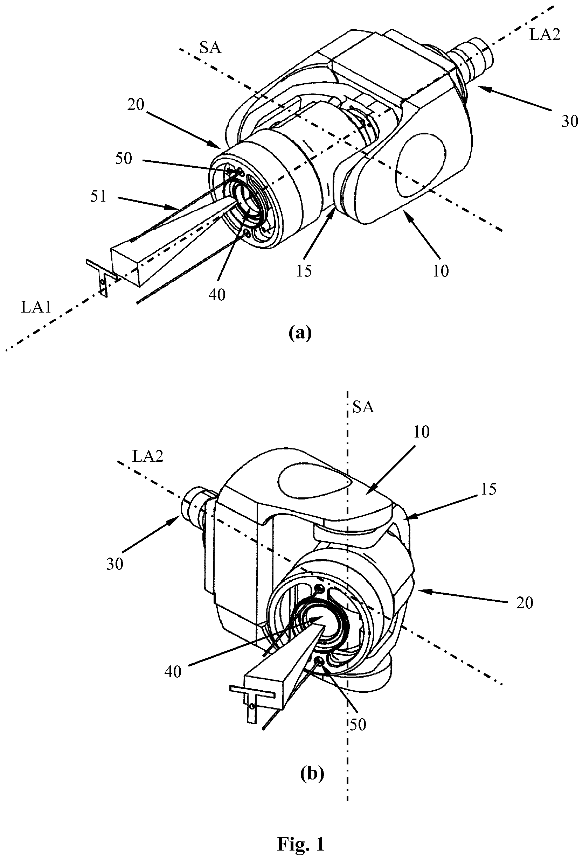

**Fig. 1** zeigt eine erfindungsgemäße Vorrichtung für ein Inspektionssystem mit einem Drehmodul 20, das über eine Schwenkgabel 15 mit einem Schwenkgehäuse 10 gekoppelt ist.

In der Abbildung (a) ist die Vorrichtung in ihrer Normalposition gezeigt, während in der Abbildung (b) das Schwenkgehäuse 90° um seine Längsachse LA2 gedreht ist und die Schwenkgabel 15 etwa um 45° um die Schwenkachse SA geschwenkt ist.

Die Vorrichtung umfasst ein Schwenkgehäuse 10, das an dem hinteren Ende eine Drehachse 30 aufweist, über die die Vorrichtung beispielsweise an einem Inspektionswagen oder an eine Hebeeinrichtung des Inspektionswagen oder an einer anderen Vorrichtung bzw. Befestigungsvorrichtung oder -einrichtung des Inspektionswagens befestigt werden kann. Das Schwenkgehäuse ist um seine Längsachse LA2 in beide Richtungen um 360° drehbar, wobei die Signal- und Energieübertragung über einen Schleifring erfolgt, sodass das Schwenkgehäuse praktisch unendlich um die Längsachse LA2 gedreht werden kann.

Zwischen den beiden Seitenwänden des Schwenkgehäuses 10 ist eine Schwenkgabel 15 angeordnet, wobei die Schwenkgabel 15 um eine Schwenkachse SA relativ zu dem Gehäuse 10 schwenkbar ist.

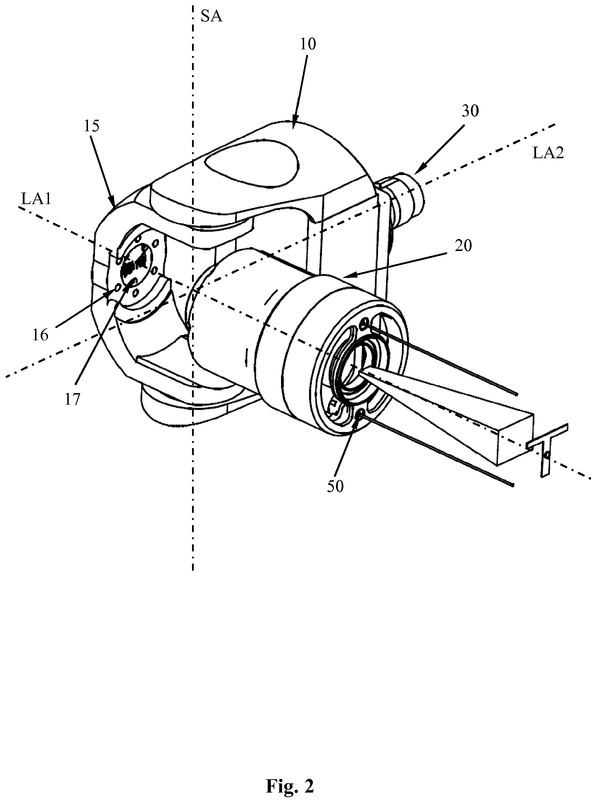

Die Schwenkgabel 15 wiederrum nimmt das Drehmodul 20 auf, sodass das Drehmodul zusammen mit der Schwenkgabel 15 relativ zum Schwenkgehäuse 10 geschwenkt werden kann. Die Anordnung des Drehmoduls 20 an der Schwenkgabel 15 bzw. die Befestigung des Drehmoduls 20 an der Schwenkgabel 15 wird mit Bezug auf Fig. 2 näher beschrieben.

Das Drehmodul 20 wiederrum ist um seine Längsachse LA1 relativ zum Schwenkgehäuse 10 bzw. zur Schwenkgabel 15 drehbar.

Damit kann das Drehmodul 20 um alle drei Achsen gedreht werden.

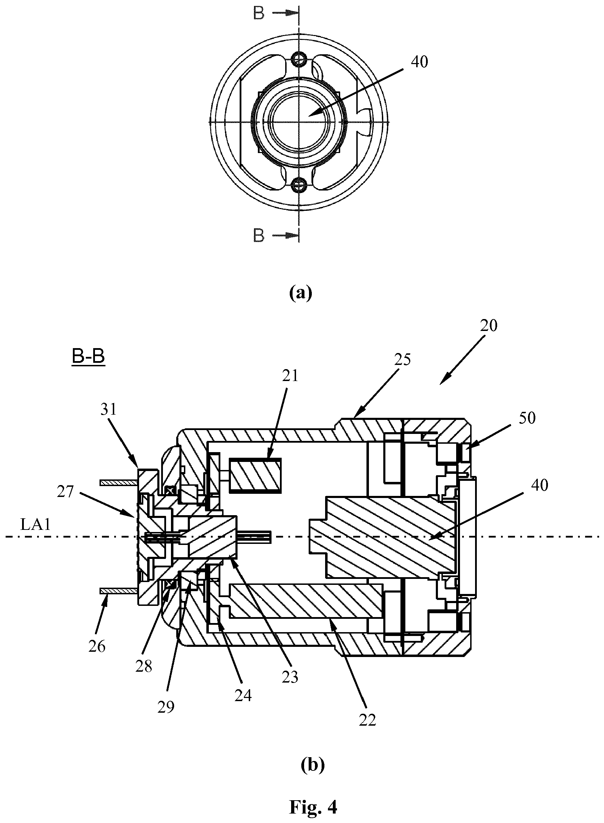

Erfindungsgemäß kann das Drehmodul 20 in Abhängigkeit des Drehwinkels des Schwenkgehäuses 10 um einen Drehwinkel um die Längsachse LA1 gedreht werden, sodass eine in dem Drehmodul angeordnete Kamera 40 ein Bild unabhängig von dem Drehwinkel des Schwenkgehäuses immer lagerrichtig aufnehmen kann. Die genaue Ausgestaltung des Drehmoduls 20 wird mit Bezug auf Fig. 4 näher beschrieben.

An der Schwenkgabel 15 bzw. an dem Schwenkgehäuse 10 sind Anschläge vorgesehen, die den maximalen Schwenkwinkel der Schwenkgabel 15 um die Schwenkachse SA in beide Richtungen begrenzt, um ein Beschädigen des Drehmoduls 20 bei einem zu großen Schwenkwinkel zu verhindern, wenn etwa das Drehmodul 20 bei einem zu großen Schwenkwinkel gegen das Schwenkgehäuse 10 stößt.

Bei der in Fig. 1 gezeigten Ausführungsform eines Drehmoduls 20 weist das Drehmodul zwei Beleuchtungsmittel 50 auf, die hier als Laserdioden ausgestaltet sind. Mit den Laderdioden 50 können beispielsweise Laserstrahlen 51 auf ein mit der Kamera 40 aufzunehmendes Objekt bzw. auf ein zu vermessendes Objekt projiziert werden. Weil die Laserdiode 50 und die Kamera 40 von dem Drehmodul 20 umfasst sind bzw. Bestandteil des Drehmoduls 20 sind bzw. in dem Drehmodul 20 angeordnet sind drehen sich sowohl die Kamera 40 als auch die Laserdioden 40 zusammen mit dem Drehmodul um die Längsachse LA1, sodass bei einem mit der Kamera 40 aufgenommenen Bild, das die projizierten Lichtpunkte enthält, die Lichtpunkte in dem Bild immer die korrekte Position relativ zu dem aufgenommenen Objekt haben.

Selbstverständlich können auch andere bzw. zusätzliche Leuchtmittel an dem Drehmodul angeordnet sein, mit denen beispielsweise ein aufzunehmendes Objekt bzw. ein aufzunehmender Bereich ausgeleuchtet werden kann.

**Fig. 2** zeigt eine erfindungsgemäße Vorrichtung, bei der das Schwenkgehäuse 10 um einen Winkel von 90° um die Längsachse LA2 gedreht ist, die Schwenkgabel 15 um einen Winkel vom 90° um die Schwenkachse SA geschwenkt ist und das Drehmodul 20 von der Schwenkgabel 15 gelöst ist.

In einer besonders vorteilhaften Ausführungsform der Erfindung ist es vorgesehen, dass das Drehmodul 20 von der Schwenkgabel 15 gelöst werden kann, um so beispielsweise einen besonders einfachen Austausch eines Drehmoduls zu ermöglichen. Damit können an der Schwenkgabel 15 unterschiedlich ausgestaltete Drehmodule angebracht werden, ohne die Schwenkgabel und das Schwenkgehäuse austauschen zu müssen.

Die Schwenkgabel 15 weist in der in Fig. 2 gezeigten Ausführungsform eine Anzahl von Bohrlöchern 16 auf, die beabstandet zueinander um die Längsachse LA1 herum angeordnet sind. Die Längsachse LA1 des Drehmoduls 20 entspricht dabei der Längsachse der Schwenkgabel 15. An der Rückseite des Drehmoduls 20 sind entsprechende Schrauben bzw. Bolzen vorgesehen, die in Eingriff mit den Bohrlöchern 16 gebracht werden können, um das Drehmodul 20 fest mit der Schwenkgabel 15 zu verbinden.

In einer alternativen, hier nicht gezeigten Ausgestaltung, kann die Schwenkgabel 15 eine Anzahl von Bolzen aufweisen, die beabstandet zueinander um die Längsachse LA1 herum angeordnet sind und die in Eingriff mit an der Rückseite des Drehmoduls 20 angeordneten und mit den Bolzen korrespondieren Sacklöchern gebracht werden können.

In einer noch weiteren Ausgestaltung können an der Rückseite des Drehmoduls 20 und an der Schwenkgabel 15 Bohrlöcher vorgesehen sein, die jeweils beabstandet zueinander um die Längsachse LA1 herum angeordnet sind und die miteinander korrespondieren. Schrauben können dann durch die Bohrlöcher der Schwenkgabel hindurchgeführt werden und in dem jeweiligen Bohrloch des Drehmoduls befestigt werden.

Innerhalb der Bohrlöcher 16 ist eine Kontaktplatine 17 angeordnet, die mit einer an der Rückseite des Drehmoduls 20 vorgesehenen Kontaktplatine korrespondiert bzw. operativ mit der an der Rückseite des Drehmoduls 20 angeordneten Kontaktplatine gekoppelt werden kann. Das kann beispielsweise mittels an einer der beiden Kontaktplatinen vorgesehenen Pins bewerkstelligt werden.

Damit kann das Drehmodul 20 einfach in die Schwenkgabel 15 eingesetzt und mit der Schwenkgabel 15 verbunden werden, sowie besonders einfach wieder von der Schwenkgabel 15 gelöst werden.

Bei den hier gezeigten Ausführungsformen der erfindungsgemäßen Vorrichtung können den Längsachsen LA1, LA2 und der Schwenkachse SA jeweils ein Drehsensor bzw. Drehwinkelsensor zugeordnet sein, mit dem der jeweilige Drehwinkel bzw. Schwenkwinkel erfasst werden kann. In Abhängigkeit eines erfassten Drehwinkels bzw. Schwenkwinkels kann eine der beiden anderen Dreh- bzw. Schwenkwinkel oder beide Dreh- bzw. Schwenkwinkel eingestellt werden, was beispielsweise mittels eines der jeweiligen Dreh- bzw. Schwenkachse zugeordneten Elektromotors bewerkstelligbar ist.

Beispielsweise kann ein dem Drehmodul 20 zugeordneter Elektromotor das Drehmodul 20 um einen Winkel um die Längsachse LA1 drehen, der dem negativen Drehwinkel des Schwenkgehäuses 10 um die Längsachse LA2 entspricht. Damit ist gewährleistet, dass das von der Kamera 40 aufgenommene Bild unabhängig von dem Drehwinkel des Schwenkgehäuses 10 um die Längsachse LA2 immer lagerichtig ist.

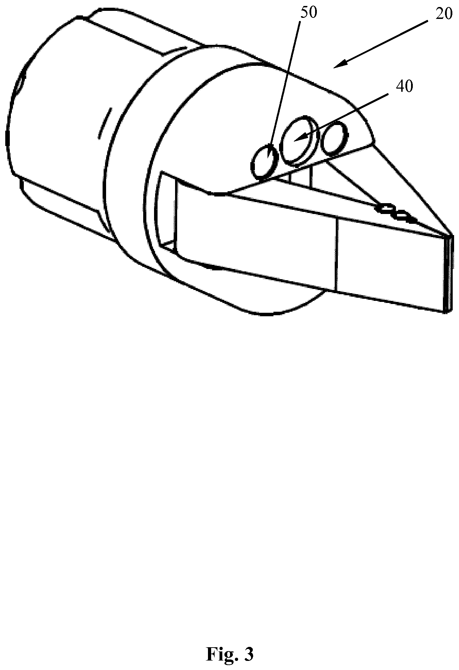

In einer Ausgestaltung der vorliegenden Erfindung kann das Drehmodul 20 aber auch unabhängig von dem Drehwinkel des Schwenkgehäuses 10 um die Längsachse LA2 um einen bestimmten Winkel um die Längsachse LA1 gedreht werden, was insbesondere dann vorteilhaft ist, wenn an dem Drehmodul bzw. in dem Drehmodul ein Werkzeug, etwa ein Greifer vorgesehen ist, wie mit Bezug auf Fig. 3 gezeigt.

Anstelle der Bohrlöcher 16 an der Schwenkgabel 15 und der mit den Bohrlöchern 16 korrespondierenden Schrauben bzw. Bolzen an dem Drehmodul 20 kann auch ein Bajonettverschluss zum Befestigung des Drehmoduls 20 an der Schwenkgabel 15 vorgesehen sein, wobei die Verbindungen zwischen den beiden Kontaktplatinen an der Schwenkgabel und an dem Drehmodul entsprechend angepasst sein müssen. Damit wird ein noch schnelleres Lösen des Drehmoduls 20 von der Schwenkgabel 50 bzw. ein noch schnelleres Anbringen eines Drehmoduls 20 an der Schwenkgabel 15 ermöglicht.

**Fig. 3** zeigt eine alternative Ausgestaltung eines Drehmoduls 20 einer erfindungsgemäßen Vorrichtung.

Das Drehmodul 20 umfasst hier einen Greifer bzw. zwei Backen einer Zange. Oberhalb der Zange sind eine Kamera 40 und zwei Laserdioden 50 vorgehsehen, um das mit der Zange zu bearbeitende bzw. zu greifende Objekt auszuleuchten bzw. aufzunehmen. Wenn an dem Drehmodul 20 ein Werkzeug angeordnet ist, ist es vorteilhaft, wenn das Drehmodul 20 unabhängig von dem Drehwinkel des Schwenkgehäuses 10 um die Längsachse LA2 gedreht werden kann, um beispielsweise bei einer Zange eine optimale Greifposition einnehmen zu können.

Anstelle einer Zange kann beispielsweise auch eine Fräseinrichtung vorgesehen sein, um etwa Ablagerungen oder Verkrustungen in einem Kanalrohr gezielt abfräsen zu können. Weil das Drehmodul bzw. die Vorrichtung um alle drei Achsen gedreht bzw. verschwenkt werden kann, kann die Greifzange bzw. die Fräsvorrichtung in jede beliebige bzw. benötigte Position gebracht werden bzw. eine Vorbestimmte oder beliebige Fräskurve abgefahren werden.

**Fig. 4** zeigt eine detaillierte Ansicht eines Drehmoduls 20 in einer Schnittansicht entlang der Schnittachse B-B.

Das Drehmodul 20 umfasst ein Gehäuse 25, das um seine Längsachse LA1 drehbar auf einer Drehachse bzw. Welle 31 gelagert ist. Das Gehäuse ist vorzugsweise luft- und/oder wasserdicht ausgestaltet. Hierzu ist im hinteren Bereich des Gehäuses 25, wo das Gehäuse 25 auf der Drehachse bzw. Welle aufliegt eine Dichtung 28 vorgesehen, die hier als umlaufende Dichtung, etwa ein O-Ring ausgestaltet ist. Im vorderen Bereich des Gehäuses 25 weist die Gehäusewandung lichtdurchlässige Bereiche auf, hinter denen eine Kamera 40 und Laserdioden 50 angeordnet sind. Die lichtdurchlässigen Bereiche können beispielsweise durch Glaseinsätze realisiert sein, wobei vorzugsweise sichergestellt ist, dass die Glaseinsätze luft- bzw. wasserdicht eingesetzt sind. Ein luft- bzw. wasserdichtes Gehäuse hat insbesondere bei der Verwendung der erfindungsgemäßen Vorrichtung in einem Inspektionssystem, insbesondere Kanal- bzw. Rohrinspektionssystem den Vorteil, dass die im Inneren des Gehäuses 25 angeordneten elektrischen und mechanischen Komponenten vor Wasser und Schmutz geschützt sind. Ein weiterer Vorteil liegt darin, dass das Drehmodul 20 explosionsgeschützt ausgestaltet werden kann.

Ferner ist das Gehäuse 25 an der hinteren Seite und im Bereich der Drehachse bzw. Welle 31 über eine Lagerung 29 auf der Welle bzw. Drehachse 31 gelagert, um ein leichtgängiges Drehen des Gehäuses 25 auf der Welle 31 um die Längsachse LA1 zu gewährleisten.

An der Rückseite der Drehachse bzw. Welle 31 sind Stifte, Bolzen oder Schrauben 26 angeordnet, die im Wesentlichen parallel zur Längsachse LA1 ausgerichtet sind. Die Bolzen bzw. Schrauben 26 korrespondieren mit den in Fig. 2 gezeigten Bohrlöchern 16 der Schwenkgabel 15. Das Drehmodul 20 kann an der Schwenkgabel 15 befestigt werden, indem die Bolzen bzw. Schrauben 26 in die dafür vorgesehenen Bohrlöcher 16 der Schwenkgabel 15 eingeschoben werden und beispielsweise an der Rückseite der Schwenkgabel mit Schraubmutter verschraubt werden.

Damit wird ein einfacher Austausch des Drehmoduls 20 ermöglicht, ohne die Schwenkgabel 15 und/oder das Schwenkgehäuse 10 ebenfalls mit Austauschen zu müssen.

Alternativ zu den hier gezeigten Schrauben 26 und den Bohrlöchern 16 der Schwenkgabel 15 kann auch eine Schnellkupplung vorgesehen sein, beispielsweise in Form eines Bajonettverschlusses, sodass das Drehmodul nur mehr auf die Schwenkgabel aufgesteckt und mittels einer Drehung um einen bestimmen Winkel an der Schwenkgabel arretiert werden kann.

In der Welle bzw. Drehachse 31 ist in axialer Richtung, d.h. entlang der Längsachse LA1 ein Schleifring 23 vorgesehen, der zur Signal- und Energieübertragung zwischen dem Drehmodul und der Schwenkgabel 15 dient. Damit kann das Gehäuse 25 um einen beliebigen Drehwinkel in beide Richtungen um die Längsachse LA1 gedreht werden.

Ferner ist im hinteren Bereich der Welle bzw. Drehachse 31 eine Kontaktplatine 27 eingesetzt, die operativ mit dem Schleifring 23 gekoppelt ist. Die Kontaktplatine 27 ist ferner operativ mit der in Fig. 2 gezeigten Kontaktplatine 17 der Schwenkgabel 15 koppelbar. Das Koppeln der Kontaktplatine des Drehmoduls 20 mit der Kontaktplatine 15 kann beispielsweise über an einer der beiden Kontaktplatinen vorgesehen Pins erfolgen.

Im Inneren des Gehäuses 25 sind ein Drehgeber 21 und ein Motor 22, beispielsweise ein Elektromotor angeordnet. Über die Kontaktplatine 27 und den Schleifring 23 werden sämtliche in dem Gehäuse 25 angeordneten elektronischen Komponenten mit Energie versorgt. Ferner wird über die Kontaktplatine 27 und dem Schleifring 23 die Signalübertragung zwischen den in dem Gehäuse 25 angeordneten elektronischen Komponenten und dem Inspektionssystem abgewickelt.

Der Drehgeber 21 und der Elektromotor 22 sind fest mit dem Gehäuse 25 verbunden.

Der Elektromotor 22 weist in der hier gezeigten Ausgestaltung eine Zahnradverbindung 24, vorzugsweise eine Zahnradverbindung mit Rutschkupplung auf, wobei die Zahnradverbindung 24 in die Welle bzw. Drehachse 31 eingreift, sodass ein Drehen der Zahnradverbindung ein Drehen des Gehäuses 25 um die Längsachse LA1 bewirkt. Alternativ zur Zahnradverbindung 24 kann eine Koppelung des Elektromotors mit der Welle bzw. Drehachse 31 beispielsweise auch mittels eines Riemens erfolgen.

Der Drehgeber 21 greift ebenfalls in die Welle bzw. Drehachse 31 ein, sodass bei einer Drehung des Gehäuses um die Welle bzw. Drehachse 31 der Drehwinkel des Gehäuses relativ zur Welle 31 ermittelt werden kann. Vorzugsweise wird zwischen der Welle 31 und dem Drehgeber 21 eine Übersetzung von 1:1 gewählt, sodass sich bei einer kompletten Umdrehung des Gehäuses 25 um die Welle 31 die Welle des Drehgebers 21 sich ebenfalls genau einmal dreht. Selbstverständlich können auch andere Übersetzungsverhältnisse vorgesehen sein.

In einer Ausgestaltung der Erfindung kann es vorgesehen sein, dass der mittels eines Drehwinkelsensors erfasste Drehwinkel des Schwenkgehäuses 10 verwendet wird, um den Elektromotor 22 derart anzusteuern, dass dieser eine Drehbewegung des Gehäuses 25 um einen Drehwinkel bewirkt, der dem negativen Drehwinkel des Drehwinkels des Schwenkgehäuses entspricht. Dies ist insbesondere dann von Vorteil, wenn in dem Gehäuse 25 eine Kamera 40 vorgesehen ist und es erforderlich ist, dass das von der Kamera 40 aufgenommene Bild bzw. Videobild immer lagerichtig aufgenommen wird. Hierzu ist der Drehgeber 21 vorgesehen, um den Drehwinkel des Gehäuses 25 um die Längsachse LA1 zu ermitteln. Dadurch kann das Gehäuse 25 so lange um die Längsachse LA1 gedreht werden, bis der von dem Drehgeber erfasste Drehwinkel dem negativen Drehwinkel des Schwenkgehäuses entspricht.

In einer Ausgestaltung der Erfindung kann das Gehäuse 25 aber auch unabhängig von dem Drehwinkel des Schwenkgehäuses 10 um die Längsachse LA1 gedreht werden, d.h. der Drehwinkel des Gehäuses 25 kann verschieden von dem (negativen) Drehwinkel des Schwenkgehäuses sein. Dies ist insbesondere dann von Vorteil, wenn an dem Drehmodul 20 ein Werkzeug, wie beispielsweise mit Bezug auf Fig. 3 gezeigt, angeordnet ist. Damit kann das Werkzeug, etwa ein Greifer in eine für das Greifen eines Objektes optimale Position gedreht werden. Beispielsweise kann ein Bediener des Inspektionssystems eine Drehung des Gehäuses 25 um einen Drehwinkel von beispielsweise 30° einstellen. Der Elektromotor 22 wird dann das Gehäuse 25 so lange drehen, bis der Drehgeber 21 einen Drehwinkel von ebenfalls 30° erfasst.

In dem in Fig. 4 gezeigten Beispiel sind in dem Gehäuse auch zwei Laserdioden 50 angeordnet, die beispielsweise für die Projektion von Referenzpunkten auf ein Objekt verwendet werden können. Diese Referenzpunkte können dann von der Kamera 40 aufgenommen werden und erscheinen auch in dem aufgenommenen Bild lagerichtig, weil sowohl die Kamera 40 als auch die Laserdioden 50 zusammen mit dem Gehäuse 25 gedreht werden.

Das Vorsehen des Elektromotors 22 und des Drehgebers 21 im Inneren des Gehäuses und die Ausführung des Drehmoduls 20 derart, dass mit dem Elektromotor das gesamte Gehäuse 25 um eine Drehachse LA1 gedreht wird hat den Vorteil, dass das Gehäuse mit sämtlichen der darin angeordneten bzw. daran angebrachten Komponenten gedreht wird. Um beispielsweise ein lagerichtiges Bild zu erhalten muss lediglich das Gehäuse 25 in eine Position gebracht werden, die ein lagerichtiges Aufnehmen eines Bildes bzw. Videobildes gewährleistet, wobei gleichzeitig auch die von der Laserdioden 50 erzeugten Referenzpunkte in dem aufgenommenen Bild lagerichtig dargestellt werden. Dadurch wird vermieden, dass weder die Kamera 40 noch die Laserdioden 50 bzw. andere Komponenten einzeln gedreht werden müssen, um beispielsweise das Aufnahmen eines lagerichtigen Bildes zu gewährleisten.

Die Komplexität des Drehmoduls wird dadurch erheblich verringert, was gleichzeitig einen geringeren Produktionsaufwand und eine geringere Fehleranfälligkeit zur Folge hat.

Weil allen drei Achsen, d.h. der Längsachse LA2 des Schwenkgehäuses, der Längsachse LA1 des Drehmoduls und der Schwenkachse SA der Schwenkgabel ein Drehgeber bzw. Drehwinkelsensor und ein entsprechender Antrieb zugeordnet sind, kann das Drehmodul in nahezu jede beliebige Position im Inneren eines Rohres bzw. Kanals gebracht werden. Durch Vorsehen des Schleifringes 23 in dem Drehmodul 20 könne Drehbewegungen des Drehmoduls über 360° hinaus durchgeführt werden, was die Flexibilität beispielsweise während einer Inspektion erhöhen und den zeitlichen Aufwand für eine Inspektion verringern kann. Die Verwendung eines Steckmechanismus, der durch die Bolzen bzw. Schrauben 26 und die Bohrlöcher 16 gebildet wird, gewährleistet einen einfachen und schnellen Austausch eines Drehmoduls, sodass beispielsweise das in Fig. 4 gezeigte Drehmodul besonders einfach und schnell durch ein in Fig. 3 gezeigtes Drehmodul mit einem Werkzeug ausgewechselt werden kann.

### Bezugszeichen

- 10: Schwenkgehäuse
- 15: Schwenkgabel
- 16: Bohrlöcher zum Befestigen des Drehmoduls an der Schwenkgabel
- 17: erste Kontaktplatine der Schwenkgabel
- 20: Drehmodul (für Kamera oder Greifer)
- 21: Drehgeber
- 22: Motor
- 23: Schleifring
- 24: Zahnradverbindung mit Rutschkupplung
- 25: Gehäuse des Drehmoduls
- 26: Schrauben
- 27: zweite Kontaktplatine des Drehmoduls
- 28: Dichtung
- 29: Lagerung
- 30: Drehachse des Schwenkgehäuse
- 31: Drehachse des Drehmoduls
- 40: Kamera
- 50: Laserdioden
- 51: Laserstrahlen zur Vermessung
- B-B: Schnittachse
- LA1: Längsachse des Drehmoduls
- LA2: Längsachse des Schwenkgehäuses
- SA: Schwenkachse der Schwenkgabel

## Patentansprüche

1. Vorrichtung für ein Kanal- bzw. Rohrinspektionssystem, umfassend ein Drehmodul (20), das mit einem Schwenkgehäuse (10) gekoppelt ist, wobei das Schwenkgehäuse (10) um seine Längsachse (LA2) drehbar ist,
**dadurch gekennzeichnet, dass**
- die Vorrichtung eine Schwenkgabel (15) umfasst, an der das Drehmodul (20) lösbar befestigt ist und mit der das Drehmodul (20) mit dem Schwenkgehäuse (10) gekoppelt ist, wobei die Schwenkgabel (15) um eine Schwenkachse (SA) relativ zum Schwenkgehäuse (10) schwenkbar ist,
- das Drehmodul (20) um seine Längsachse (LA1) relativ zur Schwenkgabel (15) drehbar ist, und
- das Drehmodul (20) einen Schleifring (23) zur Signal- und Energieübertragung zwischen dem Drehmodul (20) und dem Schwenkgehäuse (10) umfasst.

2. Vorrichtung nach dem vorhergehenden Anspruch, wobei an der Schwenkgabel (15) eine erste Kontaktplatine (17) und an dem Drehmodul (20) eine zweite Kontaktplatine (27) angeordnet sind, wobei die erste Kontaktplatine operativ mit der zweiten Kontaktplatine koppelbar ist, und wobei die zweite Kontaktplatine operativ mit dem Schleifring (23) gekoppelt ist.

3. Vorrichtung nach einem der vorhergehenden Ansprüche, wobei das Drehmodul (20) ein Gehäuse (25) und eine Drehachse (31) umfasst, wobei das Gehäuse drehbar um die Drehachse auf der Drehachse gelagert ist, wobei in dem Gehäuse ein Drehgeber (21) und ein Motor (22) angeordnet sind, die jeweils fest mit dem Gehäuse verbunden sind, wobei der Drehgeber und der Motor mit der Drehachse gekoppelt sind, wobei der Motor vorgesehen ist das Gehäuse relativ zur Drehachse zu drehen und wobei der Drehgeber vorgesehen ist den Drehwinkel des Gehäuses relativ zur Drehachse aufzunehmen.

4. Vorrichtung nach Anspruch 3, wobei der Schleifring (23) in der Drehachse (31) angeordnet ist.

5. Vorrichtung nach einem der Ansprüche 3 oder 4, wobei der Motor (22) über eine Zahnradverbindung (24), vorzugsweise Zahnradverbindung mit Rutschkupplung, mit der Drehachse gekoppelt ist.

6. Vorrichtung nach einem der Ansprüche 3 bis 5, wobei in dem Gehäuse (25) eine Bildaufnahmeeinrichtung (40) angeordnet ist.

7. Vorrichtung nach einem der Ansprüche 3 bis 6, wobei in dem Gehäuse (25) ein, vorzugsweise zwei Leuchtmittel (50), vorzugsweise Laserdioden angeordnet sind.

8. Vorrichtung nach einem der Ansprüche 3 bis 7, wobei in dem Gehäuse (25) oder an dem Gehäuse ein Werkzeug, insbesondere Greifer oder Fräsmittel, oder Sensoren angeordnet sind.

9. Vorrichtung nach einem der Ansprüche 3 bis 8, wobei das Gehäuse (25) druck- und/oder wasserdicht ausgestaltet ist.

10. Vorrichtung nach einem der vorhergehenden Ansprüche, wobei der Längsachse (LA1) des Drehmoduls (20), der Längsachse (LA2) des Schwenkgehäuses (10) und/oder der Schwenkachse (SA) der Schwenkgabel (15) jeweils ein Drehsensor zur Erfassung des jeweiligen Dreh- bzw. Schwenkwinkels zugeordnet ist.

11. Vorrichtung nach einem der vorhergehenden Ansprüche 3 bis 10, wobei das Drehmodul (20) eine elektronische Schaltung umfasst, die angepasst ist, den Motor (22) in Abhängigkeit von dem Drehwinkel des Schwenkgehäuses (10) zu steuern.

12. Kanal- bzw. Rohrinspektionssystem, aufweisend eine Vorrichtung nach einem der vorhergehenden Ansprüche.

## Claims

1. A device for a sewer and tubing inspection system comprising a rotary module (20) which is coupled to a pivoting housing (10), said pivoting housing (10) being rotatable about its longitudinal axis (LA2), **characterised in that**
- said device comprises a pivoting fork (15) on which the rotary module (20) is releasably fastened and by means of which the rotary module (20) is coupled to the pivoting housing (10), said pivoting fork (15) being pivotable relative to the pivoting housing (10) about a pivot axis (SA),
- said rotary module (20) is rotatable about its longitudinal axis (LA1) relative to the pivoting fork (15), and
- said rotary module (20) comprises a slip ring (23) for signal and power transmission between the rotary module (20) and the pivoting housing (10).

2. The device as claimed in the preceding claim, wherein said pivoting fork (15) has a first contact board (17) arranged thereon and the rotary module (20) has a second contact board (27) arranged thereon, said first contact board being operatively coupleable to said second contact board, and said second contact board being operatively coupled to the slip ring (23).

3. The device as claimed in any of the preceding claims, wherein the rotary module (20) comprises a housing (25) and a rotation axis (31), said housing being rotatably mounted on the rotation axis so as to rotate about said rotation axis, a rotary encoder (21) and a motor (22) being arranged in said housing, said rotary encoder and said motor being coupled to the rotation axis, said motor being designed for rotating the housing relative to the rotation axis, and said rotary encoder being designed for sensing the angle of rotation of the housing relative to the rotation axis.

4. The device as claimed in claim 3, wherein the slip ring (23) is arranged in the rotation axis (31).

5. The device as claimed in any one of claims 3 or 4, wherein the motor (22) is coupled to the rotation axis via a gear connection (24), preferably a gear connection having a slip coupling.

6. The device as claimed in any one of claims 3 to 5, wherein the housing (25) has an image acquisition device (40) arranged therein.

7. The device as claimed in any one of claims 3 to 6, wherein the housing (25) has one, preferably two lighting means (50), preferably laser diodes, arranged therein.

8. The device as claimed in any one of claims 3 to 7, wherein a tool, in particular a gripper or a milling means, is arranged in the housing (25) or on the housing.

9. The device as claimed in any one of claims 3 to 8, wherein the housing (25) is realised in a pressure-tight and/or water-tight manner.

10. The device as claimed in any of the preceding claims, wherein a rotary sensor for sensing the respective rotation angle or pivot angle is respectively associated with each of the longitudinal axis (LA1) of the rotary module (20), the longitudinal axis (LA2) of the pivoting housing (10) and/or the pivot axis (SA) of the pivoting fork (15).

11. The device as claimed in any one of the preceding claims 3 to 10, wherein the rotary module (20) comprises an electronic circuit that is adapted to control the motor (22) depending on the rotation angle of the pivoting housing (10).

12. A sewer and/or tubing inspection system having a device as claimed in any of the preceding claims.

## Revendications

1. Dispositif pour un système d'inspection de canalisation ou de tuyauterie, lequel comprend un module rotatif (20) qui est couplé à un boîtier pivotant (10), le boîtier pivotant (10) pouvant tourner autour de son axe longitudinal (LA2), **caractérisé en ce que**
- ledit dispositif comprend une fourche pivotante (15) à laquelle le module rotatif est fixé de manière amovible et grâce à laquelle le module rotatif (20) est couplé au boîtier pivotant (10), la fourche pivotante (15) pouvant pivoter autour d'un axe de pivotement (SA) par rapport au boîtier pivotant (10),
- le module rotatif (20) peut tourner autour de son axe longitudinal (LA1) par rapport à la fourche pivotante (15), et
- le module rotatif (20) comprend une bague collectrice (23) destinée à la transmission de signaux et d'énergie entre le module rotatif (20) et le boîtier pivotant (10).

2. Dispositif selon la revendication précédente, dans lequel une première platine de contact (17) est disposée sur la fourche pivotante (15) et une deuxième platine de contact (27) est disposée sur le module rotatif (20), la première platine de contact pouvant être couplée de manière opérationnelle à la deuxième platine de contact, et la deuxième platine de contact étant couplée de manière opérationnelle à la bague collectrice (23).

3. Dispositif selon l'une quelconque des revendications précédentes, dans lequel le module rotatif (20) comprend un boîtier (25) et un axe de rotation (31), le boîtier étant logé sur l'axe de rotation de manière à pouvoir tourner autour dudit axe de rotation, dans lequel un capteur de rotation (21) et un moteur (22) sont disposés dans le boîtier et sont reliés respectivement de manière fixe audit boîtier, le capteur de rotation et le moteur étant couplés à l'axe de rotation, dans lequel le moteur est prévu pour faire tourner le boîtier par rapport à l'axe de rotation et dans lequel le capteur de rotation est prévu pour enregistrer l'angle de rotation du boîtier par rapport à l'axe de rotation.

4. Dispositif selon la revendication 3, dans lequel la bague collectrice (23) est disposée dans l'axe de rotation (31).

5. Dispositif selon l'une des revendications 3 ou 4, dans lequel le moteur (22) est couplé à l'axe de rotation par l'intermédiaire d'une liaison par engrenage (24), de préférence une liaison par engrenage avec accouplement à glissement.

6. Dispositif selon l'une quelconque des revendications 3 à 5, dans lequel un dispositif de prise de vues (40) est disposé dans le boîtier (25).

7. Dispositif selon l'une quelconque des revendications 3 à 6, dans lequel un, de préférence deux moyens d'éclairage (50), de préférence des diodes laser, sont disposés dans le boîtier (25).

8. Dispositif selon l'une quelconque des revendications 3 à 7, dans lequel un outil, en particulier un préhenseur ou un moyen de fraisage, ou des capteurs sont disposés dans le boîtier (25) ou sur ledit boîtier.

9. Dispositif selon l'une quelconque des revendications 3 à 8, dans lequel le boîtier (25) est réalisé de manière à être étanche sous pression et/ou étanche à l'eau.

10. Dispositif selon l'une quelconque des revendications précédentes, dans lequel un capteur de rotation destiné à saisir respectivement l'angle de rotation ou de pivotement est respectivement affecté à l'axe longitudinal (LA1) du module rotatif (20), à l'axe longitudinal (LA2) du boîtier pivotant (10) et/ou à l'axe de pivotement (SA) de la fourche pivotante (15).

11. Dispositif selon l'une quelconque des revendications 3 à 10, dans lequel le module rotatif (20) comprend un circuit électronique qui est conçu pour commander le moteur (22) en fonction de l'angle de rotation du boîtier pivotant (10).

12. Système d'inspection de canalisation ou de tuyauterie présentant un dispositif selon l'une quelconque des revendications précédentes.
